# EUROPÄISCHE PATENTSCHRIFT

(11) **EP 3 401 074 B1**
(45) Veröffentlichungstag und Bekanntmachung des Hinweises auf die Patenterteilung: **02.10.2019**
(21) Anmeldenummer: 18000390.7
(22) Anmeldetag: 23.04.2018
(51) Int. Cl.: B29C 45/14, A01G 9/02, B29L 31/00

(54) **PFLANZENBEHÄLTER MIT WASSERÜBERLAUFÖFFNUNG**
PLANT CONTAINER WITH WATER OVERFLOW OPENING
RÉCIPIENT VÉGÉTAL À OUVERTURE DE TROP-PLEIN

(30) Priorität: 09.05.2017 DE 202017002430 U
(43) Veröffentlichungstag der Anmeldung: 14.11.2018
(73) Patentinhaber: Pöppelmann Holding GmbH & Co. KG., 49393 Lohne (DE)
(72) Erfinder: Orschulik, Günther, 49451 Holdorf (DE)

(56) Entgegenhaltungen:
- DE-U1-202015 100 254
- KR-A- 20120 103 149
- US-A1- 2014 377 575

## Beschreibung

Die vorliegende Erfindung betrifft einen Pflanzenbehälter aus Kunststoff mit einem vorzugsweise geschlossenen Boden und mit einer mit dem Boden verbundenen Seitenwand, welche eine öffnebare Wasserüberlauföffnung aufweist.

Aus der EP 852 110 A2 ist ein oberseitig offener Pflanzenbehälter mit einem unten liegenden Wasserspeicher bekannt, welcher nach oben hin durch einen wasserdurchlässigen Trennboden begrenzt ist und in Gebrauchsstellung mit einem Füllstutzen versehen ist, der vom Trennboden zur oberen Öffnung des Pflanzenbehälters hinführt. In einer Außenwandung des Pflanzenbehälters befindet sich seitlich zum Wasserspeicher ein Sichtfenster, das aus einem Einlegeteil aus transparentem Kunststoff gebildet ist, welches beim Spritzgießen des Pflanzenbehälters an seinem randseitigen Verzahnungsprofil umspritzt wird. In dem Sichtfenster ist ein Verschwächungsbereich vorgesehen, der herausgedrückt werden kann und dann eine Überlauföffnung des Wasserspeichers ausbildet.

Das multifunktionale Einlegeteil bildet also sowohl ein Sichtfenster als auch eine herausdrückbare Überlauföffnung aus, wobei durch den separaten Spritzvorgang des Einlegeteils ein Verschwächungsbereich mit exakt ausgeformten Dünnstellen für definierte Ausbrechkräfte geschaffen wird und durch das Umspritzen des Einlegeteils eine solche herausdrückbare Überlauföffnung in der Seitenwandung des Pflanzenbehälters integrierbar ist. Allerdings erhöht das separate Spritzgießen des Einlegeteils den Herstellungsaufwand und es sind zudem größere Wandstärken erforderlich, um das Einlegeteil durch das randseitige Umspritzen dicht und fest mit der weiteren Seitenwandung zu verbinden, damit es nicht beim Aufdrücken der Überlauföffnung mit herausgedrückt wird.

Es ist Aufgabe der Erfindung, einen einfacher und insbesondere kostengünstiger herzustellenden Pflanzenbehälter mit öffnebarer Wasserüberlauföffnung zu schaffen, welcher zudem in der Funktion des Öffnens der Wasserüberlauföffnung verbessert ist.

Die Aufgabe wird gelöst durch einen Pflanzenbehälter nach Anspruch 1. Vorteilhafte Ausgestaltungen der Erfindung sind den auf diesen Anspruch rückbezogenen Unteransprüchen sowie der nachfolgenden Figurenbeschreibung zu entnehmen.

Erfindungsgemäß weist die Seitenwand des Pflanzenbehälters zumindest im Bereich der Wasserüberlauföffnung einen Folienabschnitt auf, welcher unter Freilassung der Wasserüberlauföffnung im Spritzgussverfahren mit Hinterspritztechnik (HST) hinterspritzt ist, wobei zumindest am unteren, dem Boden zugewandten Rand der Wasserüberlauföffnung das Verhältnis von der Wandstärke des randnah hinterspritzten Bereichs zur Folienstärke mindestens 2,5 ist. Der lediglich von der Folie gebildete Verschluss der Wasserüberlauföffnung lässt sich leicht von einem vorzugsweise spitzen Gegenstand, wie Schraubenzieher, Kugelschreiber, Schlüssel oder dergleichen Gebrauchsgegenstand, durchstechen bzw. aufdrücken und somit für den Ablauf überschüssigen Wassers öffnen. Es fällt dabei kein ggf. zu entsorgendes Abfallstück an, sondern die Folie reißt lediglich in ein oder mehreren Linien ein und verbleibt als solches an dem Pflanzenbehälter. Die eine konstante Dicke aufweisende Folie erfordert nur geringe Aufstoß- und Öffnekräfte, sodass eine Deformation und möglicherweise damit verbundene Beschädigung des insgesamt eine dünne Wandstärke aufweisenden Pflanzenbehälters vermieden wird. Die Folie reißt dabei maximal bis zum mindestens 2,5-fach dickeren, durch die Hinterspritzung definierten Rand der Wasserüberlauföffnung auf. Denn die Folie ist großflächig molekular mit dem quasi als Tragrahmen hinterspritzten Kunststoff der Seitenwandung dicht und fest verschmolzen. Im Gegensatz zu der aus dem Stand der Technik bekannten Umspritzung des Einlegeteils, die lediglich am schmalen Rand des Einlegeteils erfolgt, wird beim Hinterspritzen des Folienabschnitts eine wesentlich größere Fläche miteinander verbunden. Die verwendete Folie kann einschichtig sein oder auch mehrschichtig aufgebaut sein und weist insbesondere auf der zu hinterspritzenden Seite einen mit dem hinterspritzten Kunststoff verschmelzendes Material bzw. Beschichtung auf. Der Folienabschnitt kann von einem leichter zu zerreißenden Papier gebildet sein, das mit einer wasserdichten Kaschierung aus Kunststoff bedeckt ist.

Der Folienabschnitt befindet sich in der Seitenwandung vorzugsweise außen und ist dementsprechend innenseitig hinterspritzt, wodurch sich die nach innen gerichteten Aufstoßkräfte auf dem hinterspritzten Tragrahmen abstützen und ein Ablösen des Folienabschnitts von der Seitenwandung und ein Weiteraufreißen verhindert wird. Der hinterspritzte Tragrahmen bildet also eine Matrize für das Aufstoßen der Wasserüberlauföffnung aus. Dadurch dass zumindest am unteren, dem Boden zugewandten Rand der Wasserüberlauföffnung das Verhältnis von der Wandstärke des randnah hinterspritzten Bereichs zur Folienstärke mindestens 2,5 ist, wird insbesondere verhindert, dass sich die Wasserüberlauföffnung beim Aufstechen bis unter die gewünschte Überlaufhöhe öffnet und sich dadurch das vorgesehene Volumen des Wasserspeichers verringert. Denn das Einreißen bzw. Aufplatzen der Folie endet an dem wesentlich dickeren Rand. Ein Weitereinreißen wird sicher vermieden. Vorzugsweise sind auch die sich an dem unteren Rand anschließenden und nach oben verlaufenden Randabschnitte mit einem solchen Mindestwandstärkenverhältnis ausgebildet, sodass auch ein Weitereinreißen in Umfangsrichtung sicher verhindert wird. Der Rand der öffnebaren Wasserüberlauföffnung weist vorzugsweise allseitig ein solches Mindestwandstärkenverhältnis auf. Insbesondere kann die weitere Seitenwand außerhalb des randnahen Bereichs eine dünnere Wandstärke als der randnahe Bereich aufweisen.

Als randnaher Bereich wird ein Abschnitt der Seitenwand verstanden, welcher rahmenartig in einer Breite von bis zu 10 mm die Wasserüberlauföffnung umgibt. Der Querschnitt dieses randnah hinterspritzten Bereichs weist an der dicksten Stelle eine zur Folienstärke mindestens 2,5 fach dickere Wandstärke auf. Der randnahe Bereich kann dabei ein beliebiges Profil aufweisen, wie rechteckig, dreieck- oder rampenförmig usw. und dabei insbesondere abgerundet sein.

Bei dem Pflanzenbehälter kann es sich um einen mit Pflanzsubstrat befüllbaren Pflanztopf oder einen den Pflanztopf aufnehmenden Übertopf handeln. Letzterer wird meist als Dekortopf verwendet. Das Erscheinungsbild eines optisch ansprechend gestalteten Dekortopfes wird von der öffnebaren Wasserüberlauföffnung, die lediglich von dem Folienabschnitt gebildet ist, nicht beeinträchtigt. Der Folienabschnitt selbst kann Teil des Dekors sein. Insbesondere kann es sich bei dem Folienabschnitt um ein im IML-Spritzgussverfahren hinterspritztes In-Mould-Label (IML) handeln, welches sich über den vollen Umfang der Seitenwand erstrecken kann. Die Folienstärke liegt im Bereich von 0,02 bis 0,4 mm, vorzugsweise 0,03 bis 0,2 mm, besonders bevorzugt 0,04 bis 0,1 mm. Eine im Bereich der Wasserüberlauföffnung frei- bzw. ausgelassene Hinterspritzung liegt auch dann vor, wenn es aufgrund von Verschleiß und Toleranzen der Spritzgussform und des eingelegten Folienabschnitt zu seitlichen Einläufen oder gar zu einer hauchdünnen, die Folienstärke unwesentlich vergrößernden Hinterspritzung der Wasserüberlauföffnung mit einem Kunststofffilm kommt. Erfindungsrelevant ist, dass der randnahe Bereich, eine gegenüber der Folien- bzw. Wandstärke der Wasserüberlauföffnung mindestens 2,5 fach dickere Wandstärke aufweist.

Vorzugsweise ist das Verhältnis von der Wandstärke des randnah hinterspritzten Bereichs zur Folienstärke mindestens 5, weiter bevorzugt mindestens 10.

Vorzugsweise ist der Rand der öffnebaren Wasserüberlauföffnung von seiner kreisförmigen Hüllkurve nicht weiter als eine Hälfte, vorzugsweise ein Drittel des Hüllkreisradius beabstandet. Die von der Hinterspritzung begrenzte Fläche der Wasserüberlauföffnung ist im Wesentlichen quadratisch oder kreisförmig ausgebildet, wodurch das Aufstoßen der Wasserüberlauföffnung wesentlich leichter erfolgt als bei länglich ausgebildeten Bereichen. Zur Vermeidung einer Rissausbreitung in die weitere Seitenwandung aufgrund Kerbwirkung sind allenfalls vorhandene Knicke im Randverlauf in einem Winkel größer 90° ausgebildet. Vorzugsweise ist insbesondere die zum Behälterboden hin gelegene Randhälfte knickfrei ausgeführt, beispielsweise bogenförmig mit tangentialen Übergängen. Damit ist sichergestellt, dass die aufgestoßene Wasserüberlauföffnung auf die durch die Hinterspritzung begrenzte Fläche beschränkt ist.

Die öffnebare Wasserüberlauföffnung weist eine Fläche von 10 bis 1.000 mm², vorzugsweise von 25 bis 400 mm², besonders bevorzugt von 50 bis 125 mm² auf, wodurch bei entsprechender Größe des Wasserspeichers bzw. des Pflanzenbehälters eine ausreichend große Überlauföffnung für einen zügigen Ablauf überschüssigen Wassers geöffnet werden kann. Es hat sich gezeigt, dass sich eine eher kleine Fläche einer Wasserüberlauföffnung leichter öffnen lässt.

Die öffnebare Wasserüberlauföffnung weist eine Auslaufhöhe über den Boden im Bereich von 5 bis 60 % der Behälterhöhe, vorzugsweise 10 bis 40 %, besonders bevorzugt 15 bis 35 % auf und befindet sich vorzugsweise unterhalb eines mit Substrat befüllten und in dem Pflanzenbehälter eingesetzten Pflanztopfs.

Vorzugsweise sind über den Umfang und/oder über die Höhe der Seitenwand verteilt wenigstens zwei wahlweise oder bedarfsweise zu öffnende Wasserüberlauföffnungen angeordnet. Es können unterschiedliche Wasserüberlaufhöhen vorgesehen sein, wobei eine jeweilige Wasserüberlauföffnung nach der Größe eines in den Pflanzenbehälter eingesetzten Pflanztopfes geöffnet werden kann. Auch können mehrere auf gleicher Höhe liegende Wasserüberlaufstellen ausgebildet sein. Sie ermöglichen es, eine bestimmte Gesamtabflussmenge einzustellen oder eine vom Dekor und dem Aufstellort des Pflanzenbehälters abhängige Öffnung bestimmter Wasserüberlauföffnungen, sodass sich der Wasserüberlauf beispielsweise auf der Rückseite des Pflanzenbehälters befindet.

Mit dem Vorteil einer verbesserten Wahrnehmung weist die öffnebare Wasserüberlauföffnung eine von der weiteren, sie umgebenden Seitenwand in Form und/oder Beschaffenheit abweichende Oberfläche auf. Die Folie der Wasserüberlauföffnung kann beispielsweise gegenüber der sie umgebenden Seitenwand konvex vorstehen oder sie springt konkav zurück. Dieses Vor- bzw. Zurückspringen ist optisch und/oder haptisch wahrnehmbar und erleichtert das Auffinden der zu öffnenden Wasserüberlauföffnung. Eine zusätzliche Kennzeichnung kann in Fortfall gelangen. Eine solche lokale Abweichung in der Oberfläche der Seitenwandung ergibt sich bereits dadurch, dass ein nicht hinterspritzter Folienbereich eine geringere Schwindung widerfährt als mit Hinterspritzung, was sich durch Verwerfungen, Aus- oder Einbeulungen im Bereich der öffnebaren Wasserüberlauföffnung abzeichnet. Auch kann der Folienabschnitt in der Wasserüberlauföffnung vorgebeult sein und/oder eine andere Rauigkeit oder Farbe aufweisen.

Vorzugsweise handelt es sich bei dem Folienabschnitt um ein im IML-Spritzgussverfahren hinterspritztes In-Mould-Label (IML) ist, welches ein Dekor mit einem textlichen und/oder grafischen Hinweis auf die öffnebare Wasserüberlauföffnung aufweist. Um unterschiedliche Sprachen zu bedienen, muss lediglich das Druckbild des In-Mould-Labels geändert werden. Insbesondere kann das Dekor Hinweise enthalten, wie die Wasserüberlauföffnung geöffnet werden kann. Das In-Mould-Label kann sich über den vollen Umfang der Seitenwand erstrecken. Die Hinterspritzung des In-Mould-Labels kann mit Ausnahme der gewünschten Wasserüberlauföffnung vollflächig erfolgen oder auch nur den Behälterrand und den Behälterboden verbindende Stege oder eine Gitterstruktur umfassen, wobei zumindest ein hinterspritzter Rand um die Wasserüberlauföffnung herum vorgesehen ist. Die Hinterspritztechnik ist weitestgehend automatisierbar und ermöglicht die einwandfreie und kostengünstige Herstellung des erfindungsgemäßen Pflanzenbehälters in großen Stückzahlen.

Mit Vorteil bildet das In-Mould-Label ein Sichtfenster mit aus, durch das der Wasserstand im Wasserspeicher abgelesen werden kann. Das Sichtfenster kann beispielsweise dadurch geschaffen werden, dass im In-Mould-Label transparente Bereiche vorliegen, die entweder nicht hinterspritzt oder von einem transparentem Kunststoff hinterspritzt sind. Auch kann das Sichtfenster im In-Mould-Label ausgespart sein, wobei dann das aus einem transparenten Kunststoff gebildete Sichtfenster von dem In-Mould-Label begrenzt ist. Das Sichtfenster ist vorzugsweise benachbart zur Wasserüberlauföffnung angeordnet und schließt sich weiter bevorzugt unterhalb der Wasserüberlauföffnung an.

Bei der Herstellung von Pflanzenbehältern ist es außerdem möglich, wahlweise ein Folienabschnitt bzw. In-Mould-Label mit verschlossener oder geöffneter also ausgestanzter Wasserüberlauföffnung zu verwenden, um somit bereits ab Werk Pflanzenbehälter mit offener Wasserüberlauföffnung auszuliefern.

Vorzugsweise umfasst die Seitenwand wenigstens ein sich von der öffnebaren Wasserüberlauföffnung bis zum Boden erstreckendes Leitmittel für ablaufendes Wasser. Dabei kann es sich um eine erhabene Rippe oder einen vertieften Kanal handeln, die im In-Mould-Label vorgeprägt sind und entlang derer/dessen ablaufendes Wasser zum Boden gezielt abfließt.

Weitere Vorteile und Einzelheiten der Erfindung sind der nachfolgenden Figurenbeschreibung zu entnehmen. Einzelne technische Merkmale der nachfolgend beschriebenen Ausführungsbeispiele können auch in Kombination mit vorbeschriebenen Ausführungsbeispielen sowie den Merkmalen des unabhängigen Anspruchs und etwaiger weiterer Ansprüche zu erfindungsgemäßen Gegenständen kombiniert werden. Sofern sinnvoll, werden funktionell gleichwirkende Elemente mit identischen Bezugsziffern versehen. Es zeigen
- Fig. 1: einen erfindungsgemäßen Pflanzenbehälter mit einer geöffneten Wasserüberlauföffnung;
- Fig. 2: eine Innenansicht auf eine ungeöffnete Wasserüberlauföffnung;
- Fig. 2a: ein Detail der Wasserüberlauföffnung aus Fig. 2;
- Fig. 3a: eine Schnittansicht der Wasserüberlauföffnung aus Fig. 2;
- Fig. 3b-c: Schnittansichten von weiteren Ausführungen einer Wasserüberlauföffnung.

Der Pflanzenbehälter 1 aus Kunststoff umfasst einen kreisförmigen Boden 3 und eine sich vom Boden zu einem Rand 5 erstreckende kegelstumpfförmige Seitenwand 4. In dem Pflanzenbehälter 1 ist ein mit Bodenlöchern versehener Pflanztopf 2 eingehängt, wobei sein Boden zum Boden 3 des Pflanzenbehälters 1 beabstandet ist. Der Raum unter dem Pflanztopf 2 dient als Wasserspeicher, aus dem eine im Pflanztopf eingesetzte Pflanze vorzugsweise über ein Dochtelement Wasser ziehen kann.

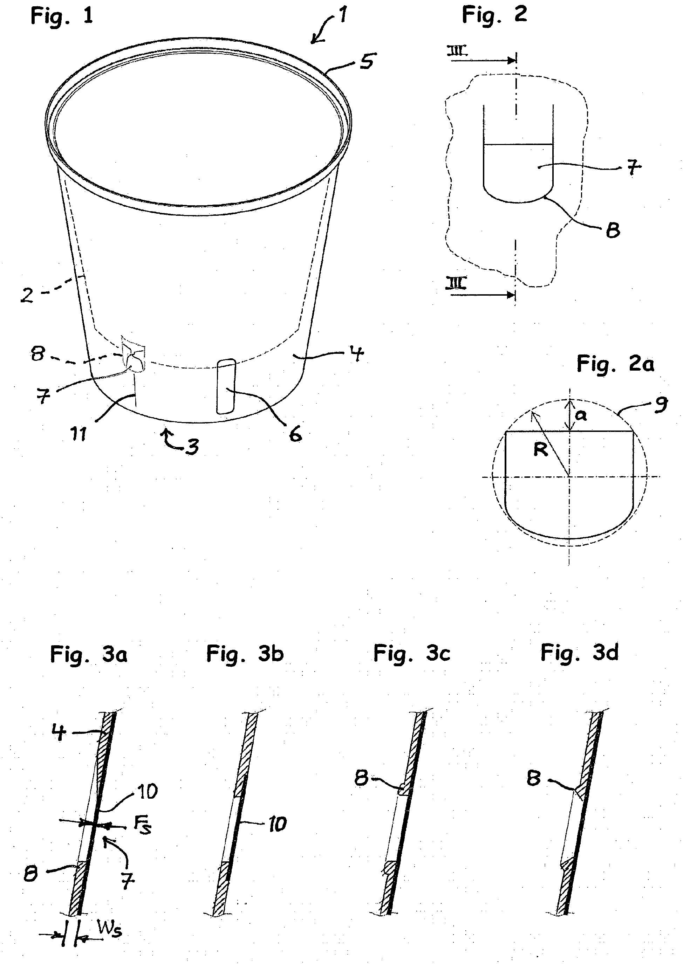

In der Seitenwand 4 befindet sich ein transparentes Sichtfenster 6, durch das der Wasserstand im Wasserspeicher abgelesen werden kann. In der Seitenwand 4 ist weiter eine Wasserüberlauföffnung 7 vorgesehen, die bei Bedarf durch einen spitzen Gegenstand geöffnet werden kann, um beispielsweise ein Übergießen oder ein Volllaufen des Pflanzenbehälters 1 bei Starkregen im Außenbereich zu verhindern. In Fig. 1 ist eine geöffnete Wasserüberlauföffnung 7 dargestellt, während die übrigen Figuren eine ungeöffnete Wasserüberlauföffnung 7 zeigen.

Die öffnebare Wasserüberlauföffnung 7 ist erfindungsgemäß durch ein In-Mould-Label 10 als Folienabschnitt verschlossen. Das In-Mould-Label 10 befindet sich auf der Außenseite der Seitenwand 4 und ist im IML-Spritzgussverfahren innenseitig vom Kunststoff des Pflanzenbehälters 1 hinterspritzt, wobei die als Wasserüberlauföffnung 7 bestimmte Fläche nicht hinterspritzt und daher freigelassen ist. Das In-Mould-Label 10 lässt sich leicht von einem spitzen Gegenstand aufstechen. Dabei reißt das In-Mould-Label 10 maximal bis zum durch die Hinterspritzung bestimmten Rand 8 auf, welcher in Fig. 1 durch eine gestrichelte Linie angedeutet ist.

Das In-Mould-Label 10 kann ein Dekor mit einem grafischen oder textlichen Hinweis auf die Wasserüberlauföffnung 7 aufweisen. Das ablaufende überschüssige Wasser wird von einer im In-Mould-Label vorgeprägten rippenförmige Erhebung 11 zur Aufstandsfläche des Pflanzenbehälters abgeleitet.

Fig. 2 zeigt eine Innensicht auf die Wasserüberlauföffnung 7, die im Wesentlichen quadratisch ausgebildet ist, wobei der untere, dem Boden zugewandte Randabschnitt einen abgerundeten Verlauf aufweist. Die Detailansicht gemäß Fig. 2a zeigt, dass der Rand 8 der öffnebaren Wasserüberlauföffnung 7 einen maximalen Abstand a von seiner kreisförmigen Hüllkurve 9 aufweist, welcher kleiner als die Hälfte des Hüllkreisradius R ist. Die Schnittansicht gemäß Fig. 3a zeigt, dass die Wandstärke Ws des unteren Randes 8 mehr als 2,5 mal dicker als die Folienstärke Fs des In-Mould-Labels 10 ist.

Die Figuren 3b bis 3d zeigen alternative Ausführungen der Wasserüberlauföffnung 7. Während sich das In-Mould-Label 10 bei der Wasserüberlauföffnung gemäß Fig. 3a über den vollen Umfang der Seitenwand 4 erstreckt, ist es in der Ausführung gemäß Fig. 3b nur wenig größer als die Wasserüberlauföffnung 7, sodass es randseitig in einer Breite von etwa 3 mm hinterspritzt ist. In den Fig. 3c und 3d ist jeweils ein gegenüber der weiteren Seitenwand dickerer Rand 8 dargestellt.

## Patentansprüche

1. **Pflanzenbehälter** aus Kunststoff mit einem vorzugsweise geschlossenen Boden und mit einer mit dem Boden verbundenen Seitenwand, welche eine öffnebare Wasserüberlauföffnung aufweist, **dadurch gekennzeichnet, dass** die Seitenwand zumindest im Bereich der Wasserüberlauföffnung einen Folienabschnitt aufweist, welcher unter Freilassung der Wasserüberlauföffnung hinterspritzt ist, und dass zumindest am unteren, dem Boden zugewandten Rand der Wasserüberlauföffnung das Verhältnis von der Wandstärke des randnah hinterspritzten Bereichs zur Folienstärke mindestens 2,5 ist.

2. Pflanzenbehälter nach Anspruch 1, **dadurch gekennzeichnet, dass** das Verhältnis von der Wandstärke des randnah hinterspritzten Bereichs zur Folienstärke mindestens 5, bevorzugt mindestens 10 ist.

3. Pflanzenbehälter nach Anspruch 1 oder 2, **dadurch gekennzeichnet, dass** der Rand der öffnebaren Wasserüberlauföffnung von seiner kreisförmigen Hüllkurve nicht weiter als eine Hälfte, vorzugsweise ein Drittel des Hüllkreisradius beabstandet ist.

4. Pflanzenbehälter nach einem der vorhergehenden Ansprüche, **dadurch gekennzeichnet, dass** die öffnebare Wasserüberlauföffnung eine Fläche von 10 bis 1.000 mm², vorzugsweise von 25 bis 400 mm², besonders bevorzugt von 50 bis 125 mm² aufweist.

5. Pflanzenbehälter nach einem der vorhergehenden Ansprüche, **dadurch gekennzeichnet, dass** die öffnebaren Wasserüberlauföffnung eine Auslaufhöhe über den Boden im Bereich von 5 bis 60 % der Behälterhöhe, vorzugsweise 10 bis 40 %, besonders bevorzugt 15 bis 35 % aufweist.

6. Pflanzenbehälter nach einem der vorhergehenden Ansprüche, **dadurch gekennzeichnet, dass** über den Umfang und/oder über die Höhe der Seitenwand verteilt wenigstens zwei wahlweise oder bedarfsweise zu öffnende Wasserüberlauföffnungen angeordnet sind.

7. Pflanzenbehälter nach einem der vorhergehenden Ansprüche, **dadurch gekennzeichnet, dass** die öffnebare Wasserüberlauföffnung eine von der weiteren, sie umgebenden Seitenwand in Form und/oder Beschaffenheit abweichende Oberfläche aufweist.

8. Pflanzenbehälter nach einem der vorhergehenden Ansprüche, **dadurch gekennzeichnet, dass** der Folienabschnitt ein In-Mould-Label ist, welches einen textlichen und/oder grafischen Hinweis auf die öffnebare Wasserüberlauföffnung aufweist.

9. Pflanzenbehälter nach einem der vorhergehenden Ansprüche, **dadurch gekennzeichnet, dass** der Folienabschnitt ein vorzugsweise zur öffnebaren Wasserüberlauföffnung benachbartes Sichtfenster mit ausbildet.

10. Pflanzenbehälter nach einem der vorhergehenden Ansprüche, **dadurch gekennzeichnet, dass** die Seitenwand wenigstens ein sich von der öffnebaren Wasserüberlauföffnung bis zum Boden erstreckendes Leitmittel für ablaufendes Wasser umfasst.

## Claims

1. **Plant container** made from plastic material comprising a preferably closed bottom and comprising a side wall, which is connected to the bottom and has an openable water overflow opening, **characterized in that** the side wall has a film section at least in the area of the water overflow opening, said area being back-injection molded while leaving the water overflow opening free, and, at least at the lower edge of the water overflow opening facing the bottom, the ratio of the wall thickness of the back-injection molded area close to the edge to the film thickness is at least 2.5.

2. Plant container according to claim 1, **characterized in that** the ratio of the wall thickness of the back-injection molded area close to the edge to the film thickness is at least 5, preferably at least 10.

3. Plant container according to claim 1 or 2, **characterized in that** the edge of the openable water overflow opening is spaced apart from its circular enveloping curve by not more than one-half, preferably one-third, of the radius of the enveloping circle.

4. Plant container according to any one of the preceding claims, **characterized in that** the openable water overflow opening has an area of 10 to 1,000 mm², preferably 25 to 400 mm², particularly preferably 50 to 125 mm².

5. Plant container according to any one of the preceding claims, **characterized in that** the openable water overflow opening has an outlet height above the bottom in the range from 5 to 60 % of the container height, preferably 10 to 40 %, particularly preferably 15 to 35 %.

6. Plant container according to any one of the preceding claims, **characterized in that** at least two water overflow openings, to be opened selectively or as needed, are arranged distributed across the circumference and/or across the height of the side wall.

7. Plant container according to any one of the preceding claims, **characterized in that** the openable water overflow opening has a surface deviating in shape and/or composition from the wider side wall surrounding it.

8. Plant container according to any one of the preceding claims, **characterized in that** the film section is an in-mould label which has a textual and/or graphic reference to the openable water overflow opening.

9. Plant container according to any one of the preceding claims, **characterized in that** the film section is preferably designed with a viewing window adjacent to the openable water overflow opening.

10. Plant container according to any one of the preceding claims, **characterized in that** the side wall comprises at least one guide means extending from the openable water overflow opening to the bottom.

## Revendications

1. **Récipient pour plantes** en matière plastique comprenant un fond inférieur de préférence fermé et une paroi latérale reliée avec le fond inférieur, laquelle comporte un orifice de trop-plein susceptible de s'ouvrir, **caractérisé en ce qu'**au moins dans la zone de l'orifice de trop-plein, la paroi latérale comporte un segment de film lequel est rétro-injecté, en laissant libre l'orifice de trop-plein et **en ce qu'**au moins sur le bord inférieur de l'orifice de trop-plein qui fait face au fond inférieur, le rapport de l'épaisseur de paroi de la zone rétro-injectée à proximité du bord à l'épaisseur du film est d'au moins 2,5.

2. Récipient pour plantes selon la revendication 1, **caractérisé en ce que** le rapport de l'épaisseur de paroi de la zone rétro-injectée à proximité du bord à l'épaisseur du film est d'au moins 5, de préférence d'au moins 10.

3. Récipient pour plantes selon la revendication 1 ou 2, **caractérisé en ce que** le bord de l'orifice de trop-plein susceptible de s'ouvrir n'est pas écarté de son enveloppe circulaire de plus d'une moitié, de préférence d'un tiers du rayon de cercle inscrit.

4. Récipient pour plantes selon l'une quelconque des revendications précédentes, **caractérisé en ce que** l'orifice de trop-plein susceptible de s'ouvrir présente une surface de 10 à 1.000 mm², de préférence de 25 à 400 mm², de manière particulièrement préférentielle de 50 à 125 mm².

5. Récipient pour plantes selon l'une quelconque des revendications précédentes, **caractérisé en ce que** l'orifice de trop-plein susceptible de s'ouvrir présente une hauteur d'écoulement au-delà du fond inférieur dans l'ordre de 5 à 60 % de la hauteur du récipient, de préférence de 10 à 40 %, de manière particulièrement préférentielle de 15 à 35 %.

6. Récipient pour plantes selon l'une quelconque des revendications précédentes, **caractérisé en ce qu'**au moins deux orifices de trop-plein à ouvrir facultativement ou en cas de besoin sont placés en distribution sur le pourtour et/ou sur la hauteur de la paroi latérale.

7. Récipient pour plantes selon l'une quelconque des revendications précédentes, **caractérisé en ce que** l'orifice de trop-plein susceptible de s'ouvrir présente une surface divergeant en matière de forme et/ou de caractéristiques du reste de la paroi latérale qui l'entoure.

8. Récipient pour plantes selon l'une quelconque des revendications précédentes, **caractérisé en ce que** le segment de film est un In-Mould-Label, lequel comporte une indication par texte et/ou par graphique sur l'orifice de trop-plein susceptible de s'ouvrir.

9. Récipient pour plantes selon l'une quelconque des revendications précédentes, **caractérisé en ce que** le segment de film forme conjointement un regard, de préférence voisin de l'orifice de trop-plein susceptible de s'ouvrir.

10. Récipient pour plantes selon l'une quelconque des revendications précédentes, **caractérisé en ce que** la paroi latérale comprend au moins un moyen conducteur d'eau qui s'écoule s'étendant de l'orifice de trop-plein susceptible de s'ouvrir jusqu'au fond inférieur.
